# EUROPEAN PATENT SPECIFICATION

(11) **EP 3 876 567 B1**
(45) Date of publication and mention of the grant of the patent: **09.08.2023**
(21) Application number: 20161324.7
(22) Date of filing: 05.03.2020
(51) Int. Cl.: H04W 4/70, H04W 4/50, H04W 72/04, H04W 74/08

(54) **A METHOD IN A WIRELESS COMMUNICATION NETWORK AND IN A BASE STATION, AND A WIRELESS COMMUNICATION NETWORK AND A BASE STATION**
VERFAHREN IN EINEM DRAHTLOSEN KOMMUNIKATIONSNETZWERK UND IN EINER BASISSTATION SOWIE EIN DRAHTLOSES KOMMUNIKATIONSNETZWERK UND EINE BASISSTATION
PROCÉDÉ DANS UN RÉSEAU DE COMMUNICATION SANS FIL ET DANS UNE STATION DE BASE ET RÉSEAU DE COMMUNICATION SANS FIL ET STATION DE BASE

(43) Date of publication of application: 08.09.2021
(73) Proprietor: FUJITSU LIMITED, Kanagawa 211-8588 (JP)
(72) Inventor: BUCKNELL, Paul, Peacehaven, East Sussex BN10 7AJ (GB); MOULSLEY, Timothy, Caterham, Surrey CR3 5EE (GB)
(74) Representative: Haseltine Lake Kempner LLP

(56) References cited:
- EP-A1- 2 944 122
- EP-A1- 3 567 777
- EP-A2- 2 186 369
- WO-A1-2018/094712
- US-B1- 8 429 103

## Description

### Field of the Invention

The present invention relates to a method in a wireless communication network. The present invention further relates to a base station and a wireless communication network.

Particularly, but not exclusively, the present invention relates to techniques for determining network configurations in a wireless communication network such as a 4G (LTE-A) or 5G (also known as New Radio, NR) wireless communication network.

### Background of the Invention

Wireless communication networks are widely known in which terminals (also called user equipments or UEs, subscriber or mobile stations) communicate over an air interface with base stations within communication range of the terminals. This part of the network is known as a Radio Access Network (RAN). Further communication may take place in a core network between base stations and other entities, usually with wired connections.

The geographical areas served by one or more base stations are generally referred to as cells, and typically many base stations are provided in appropriate locations so as to form a system covering a wide geographical area, more or less seamlessly with adjacent and/or overlapping cells.

Typically many transmission points are provided in appropriate locations so as to form a network covering a wide geographical area more or less seamlessly with adjacent and/or overlapping cells (in this specification, the terms "system" and "network" are used synonymously). For each cell, a base station, which provides or at least manages the transmission point, divides the available bandwidth, i.e. frequency and time resources, into individual resource allocations for the terminals served by the cell. In this way, a signal transmitted in a cell and scheduled by the base station has a specific location in the frequency and time domains. The terminals may be mobile and therefore may move among the cells, prompting a need for handover of the connection of the terminal to the network as the terminal moves between adjacent cells. A terminal may be in range of (i.e. able to detect signals from and/or communicate with) several cells at the same time, but in the simplest case it communicates with one "serving" cell. A terminal is normally only able to access a single network provided by a single operator. However networks/operators may cooperate.

A Radio Access Technology, RAT, is an underlying physical connection method for a radio-based (wireless) communication network. One Radio Access Technology, RAT, or type of wireless system, is based upon the set of standards referred to as Long-Term Evolution, LTE or LTE-A (Advanced) for later versions. In the system topology, in LTE (which is used here in general for LTE and LTE-A), each terminal - a UE - connects wirelessly over an air interface (Uu) to a base station in the form of an enhanced node-B or eNB.

It should be noted that various types of eNB are possible. An eNB may support one or more cells at different carrier frequencies, each cell having differing transmit powers and different antenna configurations, and therefore providing coverage areas (cells) of differing sizes. Multiple eNBs deployed in a given geographical area constitute a wireless network called the E-UTRAN. Radio Resource Control (RRC) is a protocol layer in the UE and eNB to control various aspects of the air interface, including establishing, maintaining and releasing a RRC connection between the UE and eNB. Thus, for a UE to be served by a cell implies a RRC connection with the eNB providing or controlling that cell.

Each eNB in turn is connected by a (usually) wired link (S1) to higher-level or "core network" entities, including a Serving Gateway (S-GW), and a Mobility Management Entity (MME) for managing the system and sending control signalling to other nodes, particularly eNBs, in the system. In addition a Packet Data Network (PDN) Gateway (P-GW) is present, separately or combined with the S-GW, to exchange data packets with any packet data network including the Internet. Thus, communication is possible between the LTE system and other systems. Additionally, eNBs may communicate amongst themselves via a wired or wireless X2 interface.

Incidentally, the above discussion by default refers to UEs operated by human users, for example in the form of mobile phones, laptop computers and PDAs or tablets. However, a wireless communication network may also be used for so-called Machine Type Communication (MTC) used in the Internet of Things (IoT), where MTC is a form of data communication that involves one or more entities that do not necessarily need human interaction. Entities involved in MTC, henceforth referred to as MTC devices (or terminals), are also to be considered as a kind of UE except where the context demands otherwise. Applications of MTC devices include sensors, video/imaging devices, fleet management, smart metering, product tracking, home automation, e-health, etc. MTC or loT devices are often in fixed locations, in contrast to the mobile devices of human users, or they may be positioned, for example on drones or other vehicles.

A next-generation radio access system to succeed LTE is known as "5G" or "NR" (New Radio) and is needed to satisfy modern requirements for increased bandwidth, efficiency and flexibility.

As part of the physical layer (PHY) design in 5G, the traditional concept of a base station that both schedules resources and houses the physical antennas for wireless communication with terminals (whether for human use or as part of the loT), becomes more fluid. Terminology used with respect to 5G/NR includes "gNB" (next generation Node B), which manages (either locally or remotely) at least one transmission point. Such a transmission point may also serve as a reception point, and is typically referred to as a TRP or TRxP (Transmission/Reception Point).

In the 4G core network (CN), called the Evolved Packet Core (EPC), protocol and reference points (interfaces) are defined for each entity such as the Mobility Management Entity (MME), Serving Gateway (S-GW), and Packet Data Network Gateway (P-GW) as described above. Alternatively, in the 5G core, protocol and reference points (interfaces) are defined for each Network Function (NF). A NF may be implemented either as a network element on a dedicated hardware, as a software instance running on a dedicated hardware, or as a virtualised function (not limited to specific hardware) instantiated on an appropriate platform, e.g., a cloud infrastructure.

A UE may be in RRC-ldle-state (or IDLE mode) in which it is not known to the base station, or in RRC Connected State (or connected mode) in which it is connected to a cell for a call or data transfer, or camped on to a cell. The UE monitors system information and (in most cases) paging information. Idle mode (and a corresponding campedon/connected mode) is available in different RATs, for instance E-UTRA, UTRA, GSM, CDMA2000 1xEV-DO (HRPD) or CDMA2000 1x (1xRTT) or LTE or NB-loT or NR or WiMAX or Wi-Fi or WLAN. Different RATs cooperating together may be seen as providing a Heterogeneous wireless network (HWN), and the different RATs may be provided by different operators.

Prior art document WO 2018/094712 A1 relates to the technical field of wireless communications. Provided is a wireless access network configuration method. The method discloses: a network device receiving a performance requirement of a communication service sent by a user equipment (UE); the network device determining an air interface (Al) technique which can implement the communication service according to the performance requirement of the communication service; the network device determining a configuration parameter of the AI technique according to a network resource usage condition; and the network device notifying other network devices, which implement the communication service, and/or the UE of the configuration parameter of the AI technique.

Prior art document EP 2944122 A1 relates to a radio network node, which communicates with user equipment, UEs, over a radio interface and estimates one or more quality factors, associated with each of a first and second network, that depend on a load or an expected UE behaviour or an uplink channel quality for one or both of first and second networks. The node determines one or more network selection parameters based on the estimated one or more quality factors, and communicates the one or more network selection parameters to at least one UE for enabling the UE to select one of the first and second networks for subsequent access by the at least one UE. The UE receives from the radio network node one or more network selection parameters. The UE uses the one or more network selection parameters to select one of first and second radio networks and then accesses the selected radio network

Prior art document EP 3567777 A1 relates to a method of performing uplink transmission in a wireless communication system and, more specifically, to a method performed by a terminal including receiving, from a base station, a plurality of RRC configuration information related to downlink control information (DCI); receiving, from the base station, DCI for uplink transmission, wherein parameters of specific RRC configuration information among the plurality of RRC configuration information are applied to the DCI based on a usage of the DCI; and performing uplink transmission to the base station based on the DCI. The DCI includes a field related to the usage of the DCI. When the field size of the DCI is smaller than the field size of DCI for PUSCH transmission, the field of the DCI is zero bit padded and decoded.

Prior art document US 8429103 B1 relates to apparatuses and methods for providing machine-learning services. A machine-learning service executing on a mobile platform can receive data related to a plurality of features. In some cases, the received data can include data related to features received from an application and data related to features received from the mobile platform. The machine-learning service can determine at least one feature based on the received data. The machine-learning service can generate an output by performing a machine-learning operation on the at least one feature. The machine-learning operation can be selected from among an operation of ranking the at least one feature, an operation of classifying the at least one feature, an operation of predicting the at least one feature, and an operation of clustering the at least one feature. The machine-learning service can send the output.

Prior art document EP 2186369 A2 relates to a method for reserving medium access in an ad hoc network comprising transmitting a reservation request by a reservation owner, the reservation request identifying a reservation allocation, a reservation target, and a reservation type. The reservation type identifies exclusive use of the reservation allocation by the reservation owner and the reservation target during a reservation period. The reservation target may employ a prioritized contention access (PCA) scheme to access the reservation allocation.

Current network configuration methods are not always able to efficiently match radio resource usage with the demands from diverse applications due to a lack of detailed knowledge in the network about traffic flows.

It is desirable to provide new methods for the enhancement of network configuration, aimed at improving the overall radio efficiency, for example for the support of uplink (UL) and downlink (DL) streams of user data.

### Summary of the Invention

The invention is defined in the independent claims, to which reference should now be made. Advantageous developments are set out in the dependent claims.

This method of network configuration allows improved scheduling of radio resources for a device application within a network and may thus lower the burden on the terminal and/or shorten the signalling process, potentially leading to energy saving.

Additionally, this method of network configuration allows radio resources required for spectrum efficient transfer of data to be minimised. The final decision of a selected network configuration by the base station ensures that full control is instructed only in a manner that is allowed by the base station.

The terminal may be an MTC device, or any other type of terminal, such as a smartphone. The device application may be a sensor or other physical data application, for example, running on a device separate from the terminal or directly on the terminal. The determination application may have access to (or may have undergone a learning phase to incorporate) historical device application data and chose one or more preferred network configurations in dependence upon the type of data transfer required by the device application. For example, urgent data may be better suited to a particular network configuration with low latency, as explained in more detail later.

The terminal transfers device application data to the determination application via the base station. This transfer may involve processing at the base station or the base station may simply relay the data. The determination application, in determining the preferred network configuration(s) may use this device application data and may employ various means of computational analysis. For example, the determination application may use AI methods such as machine learning (ML) algorithms, which are suitable for identifying patterns and employing inference methods upon large, varied data sets.

The network configuration that is selected by the base station in the network sets a triggering condition for device application data reporting from the terminal. Thus the network configuration may determine when data is sent.

Optionally, the triggering condition that is set by the method may be that signalling from the device application indicates to the network that device application data is to be produced. Additionally, the triggering condition may be that this device application data is to be reported. Thus the device application may dynamically control network configuration/use.

The possible network configurations that are provided by the base station to the determination application may be provided as a set of available configurations. Alternatively, the possible network configurations may be provided as a list of parameters with, for example, optional ranges of values that are deemed by the base station to be suitable for communication. In this way, the determination application may only take into consideration network configurations that consider the demands of the device application itself (knowledge that the base station will possess at the time of providing possible network configurations).

The determination application data may store such transmission parameters of the device application data as QoS, data rate and periodicity, for use in determining the preferred network configuration. Such transmission parameters may be explicitly reported by the terminal or the base station, or they may be implicitly determined following receipt of application data.

The preferred network configurations that are provided by the determination application to the base station may again be provided as a set of available configurations. Alternatively, the preferred network configurations may be provided as a list of parameters with, for example, optional ranges of values that are deemed by the determination application to be suitable for communication. If a plurality of preferred network configurations is provided, the base station may make the final selection for the network configuration and the base station may report the selected network configuration back to the determination application. In this way, the determination application may be notified of an acceptable network configuration and may use this information to inform its decision making in future instances of providing preferred network configuration. That is, this procedure may be seen as a means of reinforcement learning. If there is a single preferred network configuration, the base station may simply check that it is still a possible/suitable configuration, and if so select the single preferred network configuration or if not, then restart the method, for example by re-signalling to the determination application updated possible network configurations.

When reporting the preferred network configuration(s), the determination application may decompose the preferred network configuration(s) into aspects of the preferred network configuration(s). For example, the preferred network configuration(s) may be reported as a preferred measurement configuration and a preferred radio resource configuration. The former may be ultimately used by the terminal to configure parameters associated with measurements (for example, timings); the latter may be ultimately used by the terminal to configure parameters associated with resources (for example, frequencies of communications). In this case, the base station may acknowledge receipt of each aspect of preferred network configuration separately. Additionally or alternatively, the base station may also report the selected aspects of network configuration back to the determination application, for the same reasons as discussed above.

The determination application may generate a new ML model upon receipt of device application data in a learning stage. If a model already exists (for example in a storage unit of the determination application), the determination application may update the preexisting ML model. In either case, the ML model may be used to determine the preferred network configuration(s).

The terminal may transmit a data to send (DTS) signal to the base station when it is aware that it has a device application data packet to transmit. The base station may then provide the DTS to the determination application. Additionally or alternatively, the terminal may also provide radio resource management (RRM) information to the base station (power headroom, for example) that may be passed on to the determination application. In this way, more information is provided to the determination application than would be in other circumstances, thus enabling a more accurate determination of suitable preferred network configuration(s) at a later time. The determination application may update a ML model using the DTS signal and, optionally, the RRM information

Following reporting of the DTS signal and, optionally, RRM information to the determination application, the base station may transmit a clear to send (CTS) signal to the terminal, indicating that the device application data packet is permitted to be transmitted. Optionally, the CTS may be accompanied by an updated network configuration; this may be updated relative to any previously stored selected network configurations (stored in the base station) and updated to reflect changes in channel quality and/or terminal RRM information. The network configuration and/or any ML model may be updated at any suitable point in the method. For example either or both may be updated when data has been sent.

The device application may send a DTS signal directly to the determination application (i.e. through the application layer, with no or minimal processing in the terminal and/or the base station). Optionally, the terminal may transmit RRM information to the base station. The base station may or may not further provide the RRM information to the determination application. Where the base station does not further provide RMM information, the device application may update a ML model using the DTS and/or any subsequently received device application data. In this way, the (updated) model is based only on application data characteristics and not on characteristics of the radio network, for example.

The determination application may send a CTS signal directly to the device application (i.e. through the application layer, with no or minimal processing in the terminal and/or the base station).

The network configuration as discussed above may comprise configuration for control of radio resources and/or for control of terminal properties, such as power or directionality (beamforming) output. For example, the control may include at least one of the following:
- required uplink and downlink radio resources, for example including:
   - initial starting of data flow;
   - bit rate, latency, and/or quality of service, QoS, of data connection; and/or
   - terminating data flow;
- terminal power consumption, preferably by scheduling;
- radio resources, preferably by discontinuous transmission, DTX, and discontinuous reception, DRX; and/or
- terminal transmission power.

Furthermore, the network confirmation may be timing information about when the device application data is to be sent, such as triggers, as mentioned above.

Device application data may be generated by one or many devices or sensors. For example, 3D position data may be generated by any combination of position, angle or displacement sensors.

According to one embodiment of a second aspect of the invention, there is provided a method in a base station in a wireless communication network, the wireless communication network comprising the base station and a terminal connected with a device application, the method comprising: providing a plurality of possible network configurations to a determination application, each possible network configuration associated with transfer of device application data between the terminal and the base station; receiving at least one preferred network configuration from the plurality of possible network configurations from the determination application; selecting a network configuration from the at least one preferred network configuration and transmitting the selected network configuration to the terminal.

The method aspects in the base station correspond to the overall method in the network as described above and features of any of these method aspects may be applied to any of the other method aspects.

According to one embodiment of a third aspect of the invention, there is provided a base station in a wireless communication network, the wireless communication network comprising the base station and a terminal connected with a device application, the base station comprising: a transmitter and a receiver arranged for communication; and a controller arranged to: provide a plurality of possible network configurations to a determination application such as an artificial intelligence, AI, application, each possible network configuration associated with transfer of device application data between the terminal and the base station; receive at least one preferred network configuration from the plurality of possible network configurations from the determination application; and select a network configuration from the at least one preferred network configuration, wherein the transmitter is arranged to transmit the selected network configuration to the terminal.

A wireless communication network according to a fourth aspect of the invention comprises a terminal connected with a device application and a base station, the base station according to the third aspect.

An apparatus/system/base station according to preferred embodiments of the present invention may comprise any combination of the previous method aspects. Methods according to invention embodiments may be described as computer-implemented in that they require processing and memory capability.

The apparatus according to preferred embodiments is described as configured or arranged to carry out certain functions. This configuration or arrangement could be by use of hardware or middleware or any other suitable system. In preferred embodiments, the configuration or arrangement is by software.

According to a further aspect there is provided a program which when loaded onto a base station or network configures the base station or network to carry out the method steps according to any of the preceding method definitions or any combination thereof.

In general the hardware mentioned may comprise the elements listed as being configured or arranged to provide the functions defined. For example this hardware may include a receiver, a transmitter (or a combined transceiver), a processor, memory/storage medium, a user interface and other hardware components generally found in a terminal.

The invention may be implemented in digital electronic circuitry, or in computer hardware, firmware, software, or in combinations of them. The invention may be implemented as a computer program or computer program product, i.e., a computer program tangibly embodied in an information carrier, e.g., in a machine-readable storage device or in a propagated signal, for execution by, or to control the operation of, one or more hardware modules. A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites on the vehicle or in the back-end system and interconnected by a communication network.

Method steps of the invention may be performed by one or more programmable processors executing a computer program to perform functions of the invention by operating on input data and generating output data.

The invention is described in terms of particular embodiments. Other embodiments are within the scope of the following claims. For example, the steps of the invention may be performed in a different order and still achieve desirable results.

### Brief Description of the Drawings

Reference is made, by way of example only, to the accompanying drawings in which:
Figure 1 is a flow diagram illustrating a method in a wireless communication network;
Figure 2 is an overview diagram of a terminal and a base station, the base station connected to a determination application;
Figure 3 is a flow diagram of a method in a wireless communication network according to a general embodiment;
Figure 4 is a flow diagram of a method in a wireless communication network, comprising alternative measurement configuration;
Figure 5 is a flow diagram of a method in a wireless communication network, with improved uplink data flow for data and measurements;
Figure 6 is a flow diagram of a method in a wireless communication network, including application layer DTS and uplink data flow for data and measurements;
Figure 7 is a flow diagram of a method in a wireless communication network, in which no channel quality and measurements are sent by a gNB;
Figure 8 is a hardware diagram showing the structure of a base station according to an embodiment; and
Figure 9 is a block diagram of a computing device, such as a server, on which a determination application may execute.

### Detailed Description

Embodiments address the signalling of network control and the reporting of triggers to terminals. Additionally, embodiments address the reporting to terminals of assistance information from derived characteristics of user data flows, which is used for improved network control.

Prior art methods are disadvantageous and limited in that current means of network configuration are not always able to efficiently match radio resource usage with the demands from diverse applications due to the lack of detailed knowledge in the network on traffic flows.

Embodiments allow improved scheduling of radio resources, specifically for the efficient use of radio resources for diverse traffic flows to and from terminals. Embodiments also address the use case where the network may wish to control traffic determined by the unique characteristics of the traffic flows, such as latency, bit-rate and non-uniform data shaping. The combination of new reporting triggers and improved control of radio resources results in increased spectrum efficiency and enables energy saving in the network for both devices connected to a network and for the network itself.

Embodiments are intended for use in a mobile communication network such as 5G NR and LTE. The data to be transmitted in the uplink may be user data or control data and may have different QoS requirements, depending on the application or purpose. Currently, in 5G NR and LTE, buffer status reports are used to indicate to the network information about the data that is ready to be transmitted from the terminal in the uplink. Data streams corresponding to logical channels are associated with logical channel groups, and - depending on the arrival and priority of new data - a buffer status report (BSR) may be triggered. If no (PUSCH) resources are available to carry a BSR, a scheduling request (SR) may be transmitted. If no resources for a SR are allocated, then a random access (RACH) transmission may take place.

In the 3GPP specifications, a data stream may be considered to correspond to a radio bearer, which would include both signalling radio bearers (SRB) and data radio bearers (DRB).

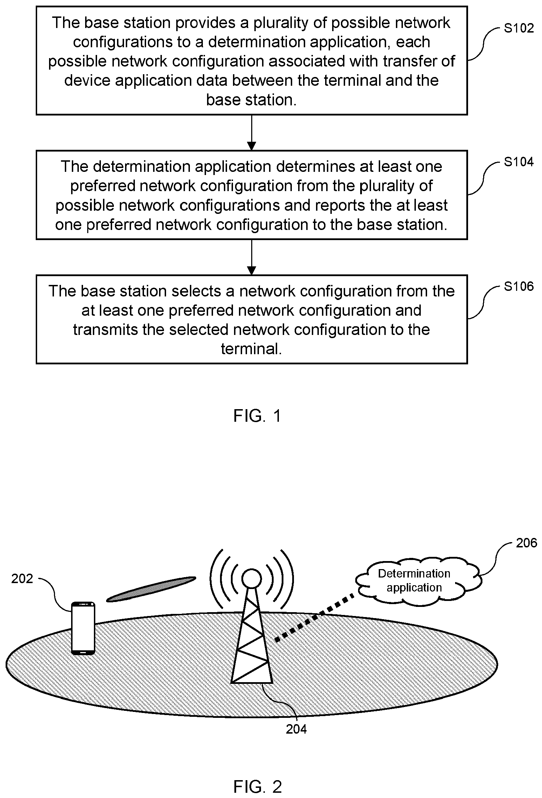

FIGURE 1 shows a method in a wireless communication network. The wireless communication network comprises a base station and a terminal connected with a device application (running on the terminal itself or running on a separate device connected to the terminal either physically or by a radio link). In S102, the base station provides a plurality of possible network configurations to a determination application. Each of the plurality of possible network configurations are network configurations that are associated with the transfer of device application data, generated by the application running on (or connected to) a device, between the terminal and the base station. For example, the application may be a sensor application collecting medical data such as pulse rate from a patient.

In S104, the determination application determines at least one preferred network configuration from the plurality of possible network configurations. This smart determination may allow previous knowledge of the device application demands to be taken into account. That is, the determination application may store and access historical information about the device application data flows and thus take into account data characteristics such a latency, bit-rate and non-uniform data shaping. Some examples include storing the characteristics of video stream data (e.g. from a video surveillance application) where various aspects of QoS are stored and accessed such as, throughput, latency, error rate and packet loss. For example, if the packet loss of a given data stream is too high then the device application may respond by requesting or even self-selecting a different network configuration. If the method is used for a plurality of device applications, the determination may take into account the requirements of all the applications, and potentially the resources available and/or a hierarchy of the applications (so that a more time sensitive application has a higher priority of scheduling). When determined, the determination application reports the at least one preferred network configuration back to the base station. The preferred network configuration may itself determine when, for example, data is read or sensed in the device application, as well as when it is sent.

In S106, following acquisition of the at least one preferred network configuration from the determination application, the base station selects a network configuration that is to be used for communication between the terminal and the base station. The base station transmits the selected network configuration to the terminal.

FIGURE 2 shows a basic example of an embodiment of the method in which a terminal 202 (such as a UE, an NB-loT/MTC device) may access the cell provided by the base station 204 (such as a gNB) operating on a RAT. The terminal 202 is connected with a device application; this may mean that the terminal 202 is running a device application on internal hardware/software or it may mean that a device application, running on another device or sensor, is in communication with the terminal 202. There may be multiple devices or sensors in communication with the terminal 202, each generating a stream of device application data. Terminal 202 may be camped on to or connected to base station 204. Base station 204 is in communication with determination application 206, shown here on the cloud, but potentially running on the base station itself. The determination application may be running an AI algorithm to assist in the determination; in these cases, the determination application may also be referred to as an AI application.

Examples of devices that generate a stream of device application data include such devices as video surveillance cameras where one or all video data streams (with optional compression) that match a particular pre-defined criteria are passed on to the determination application. Additionally, other information streams may be sent at the same time including (corresponding) location data (either from internal GPS or other means) that are also used in the determination application together with the video data.

Other additional sensor inputs such as temperature data, light sensor, motion detection, etc. may also be sent, and are examples of the types of device application data that may be useful in the determination application to determine the preferred network configuration(s). The frequency and duration of the streams of application data depend on the constraints computed by the determination application (as network configuration parameters). For example, if the multiple devices and sensors are configured as part of a video surveillance system, then motion detection may determine the update rate of the stream of video frames sent by the UE to the base station operating on a RAT. The determination of the required radio resources may then be computed by the determination application to best match the particular application data streams that are configurable at any given time, or may be needed in the future. In particular, different radio resources may be available to a given UE (or groups of UEs, if multiple applications are streamed from separate devices) by the application of a given network configuration.

Many UEs may provide streams together at a given time. The different types of radio resources available may include the configuration of radio bearers with different QoS characteristics (for example for the different data streams). These characteristics could include:
- Minimum data rate
- Maximum data rate
- Latency
- Error rate
- Packet delay variation
- Out of order delivery
- Packet loss

The determination application chooses one or more preferred network configurations based on the best matching QoS criteria for a given function being performed in the application. For example, in one example use case of a video surveillance application, if no movement is detected, then video stream data may only be required to be of a low latency and low data rate. The best network configuration may then be to use a low energy power saving state in the UE and transfer the data from the UE to the base station as infrequent packets with a long radio discontinuous transmission type (for example using Discontinuous Reception (DRX)). This is one example of how a particular network configuration may be determined by the determination application. Other examples will be evident to the skilled person and may include other aspects of network configuration including:
- Setting up a radio bearer with a given set of attributes
- Configuration of Buffer Status Reporting (BSR)
- Configuration of Power Headroom Reporting (PHR)
- Configuration of Radio resources for low latency sending of data

The last example (configuration of Radio resources for low latency sending of data) may be used, for example, to allow a network configuration of a UE so that an application may send data to the determination application with zero or very small delay. This could be, for example, used for the determination application as an alarm mechanism for applications where an alert has to be signalled as fast as possible. Such a network configuration would typically be the provision of dedicated radio resources allocated at the base station without the need to go through the normal radio access mechanisms such as RACH on a shared radio resource.

It is also possible that the determination application may apply different radio configurations for different phases of treatment of the application data streams. In this scenario, the determination application may require a different set of radio resources for a given ML algorithm, which includes a training phase before an inference phase. The training phase of the ML may optionally select much higher bandwidth data stream capabilities for a given time in order to train the ML part of the application. This may be achieved by the choice of a preferred network configuration, for example which gives higher radio resource for application data transfer during a training phase with respect to radio resource for application data transfer during an inference phase.

Another example of determining a network configuration may be, for example, the GPS location data from an application, which may be filtered to only be passed on to the determination application when the appropriate network configuration is available in the UE.

When considering the measurements and reporting to assist AI on the network side, including the terminal's measurement in PHY layer and RRM measurement, the basic connection procedure assumes that an application (a device application) may be connected to a terminal that communicates with the network. Much of the following description is based on one connected device or sensor, but there may be multiple devices and/or sensors generating data streams of application data to the analytics slice of the abstraction layer. Sensors and devices may generate application data including any of:
- temperature;
- humidity;
- 3D position;
- video snapshot;
- video stream;
- web traffic (for example, traffic from a devices internal web server, which may include both push and pull data); or
- other application data, such as UDP orTCP/IP traffic (for example: UDP traffic from media streaming, gaming traffic, secure tunnelled traffic (e.g. VPN packets); TCP/IP traffic from WWW pages, SSH traffic, mail traffic (SMTP)).

Sensors and devices may be any kind of connected/associated device whether provided as part of the UE or separately, examples including cameras, robots, private vehicles, public transportation, healthcare devices, etc.

Application data may be transferred from the terminal to the determination application, which may perform data analytics on the data using AI algorithms, for example ML algorithms. The particular algorithm in use may be chosen or determined depending on the application being deployed, or a single algorithm, possibly with data stored for the known device applications, may be employed.

The determination application may store and run a neural network, for example. This example of an AI/ML algorithm may be a supervised neural network in which labelled examples are used in a training phase. For instance, multiple sets of application data conditions with corresponding network configurations may be manually labelled suitable or unsuitable and used as training examples in a convolutional neural network, for example executing on the Tensorflow platform. Other parameters may assist in building the model, such as resource constraints and relative importance of different types of application data. Some multiple sets may be processed at the same time to reflect real life conditions of several applications executing and feeding data to the same base station. In one embodiment, the network configuration can include QoS parameters and the application data conditions can reflect application data which intrinsically requires specific QoS levels.

Alternatively the algorithm may be an unsupervised neural network, which means the model (i.e. the neural network and data analysis) teaches itself to detect preferable network configurations. Since the training in such an example is automated, the cost of training the system is greatly reduced in comparison with existing techniques. The neural network may be a generator neural network, generative neural network, or generating neural network, by which it is meant that there is a neural network, or model, that generates data under constraint of an input dataset, in other words, the generated data is a new version of the input dataset. Alternatively, the AI/ML algorithm stored and run on the determination application may incorporate aspects of decision trees, support vector machines, regression analysis, Bayesian networks, amongst other ML examples.

In the basic procedure it is assumed that the determination application in the network communicates to the terminal via the base station, the determination application providing a configuration of triggering conditions that are to be used for measurement reporting. The configuration of triggering conditions by the determination application is typically used to allow some network control for the entire process of the transfer of data to and from the determination application.

One possible configured triggering condition is when the application level signalling (e.g. measurement trigger) is made visible to the RAN. For example, the application may directly signal to the RAN that it would like to trigger a measurement at the application level at the terminal. This may enable the network to prepare to handle the triggered measurements (with network configuration). This may work even if the application layer signalling is otherwise transparent to the network. Even without explicit signalling, it is possible that the determination application may monitor the traffic generated by the device application and work out which traffic features indicate that a measurement is being triggered. This information may also be used for network configuration.

As a general overview, any "triggered measurement" may be considered as just another part of the data flow between terminal and base station.

Typically, the kind of network configuration (*nwk cfg*) control may correspond to:
- control of required UL and DL radio resources including:
   - initial starting of data flow;
   - control of bit rate, latency and QoS of data connection; and/or
   - terminating data flow;
- control of UE power consumption (e.g. for receiver signal processing) by scheduling (or, for example, video processing application in the UE);
- control of radio resources by Discontinuous Transmission and Reception (DTX, DRX); and/or
- control of UE transmission power.

Of course, other controls are not excluded.

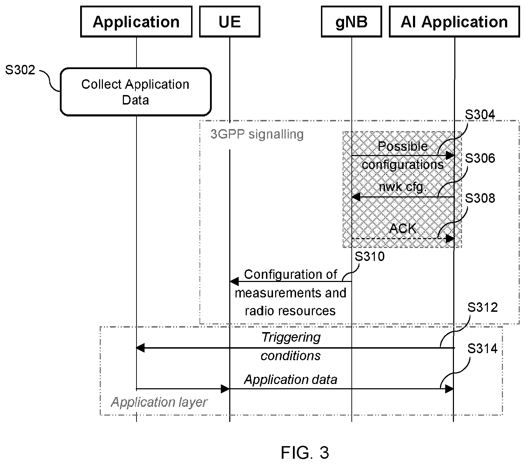

FIGURE 3 depicts basic measurement configuration in a wireless communication network and demonstrates the principle of using an AI model, for data analytics of device application data, at the determination application. The AI model consequently also controls the triggering conditions of the device application data being relayed by the UE (terminal) to the determination application. In this way, the radio resources required for the spectrum-efficient transfer of data may be minimised.

As shown in S302, the (device) application collects (device) application data. In S304, the gNB (base station) provides a plurality of possible network configurations to the determination application. The possible network configurations may be signalled as a set of available configurations or as a list of parameters, with optional ranges, or any method that allows the determination application to make a choice of the optimum network configuration based on the demands of the device application itself.

In S306, the determination application determines a preferred *nwk cfg* from the possible network configurations and reports the preferred network configuration to the gNB. That is, the *nwk cfg* is transferred from the determination application to the gNB, representing the chosen network configuration from the previously received possible configurations sent by the gNB to the determination application. In S308, optionally, the gNB may acknowledge receipt of the *nwk cfg.*

The *nwk cfg* optionally contains multiple choices for the gNB. In this case, the signalled set of *nwk cfg(s)* are used as the basis for the gNB to make the final choice. If this method is used then the optional ACK as shown may also indicate to the determination application the chosen *nwk cfg* or set of parameters.

The cross-hatched box enclosing S304 to S308 is used to identify and highlight the novel signalling exchange between gNB and determination application.

In S310, from the gNB transmits configuration of measurements and radio resources to the UE. The chosen *nwk cfg* is used by the gNB to configure the UE with the most appropriate triggering conditions for the transfer of device application data to determination application (via a radio link from the UE to the gNB and a network connection from the gNB to the determination application). It is here that the gNB configures UE measurements and radio resource allocation.

In this way, the determination application is indirectly in full control of when data is transferred (between UE and gNB) but only in a manner that is allowed by the set of possible configurations sent from the gNB to the determination application. It is this step (the gNB deciding the possible configurations) that leads to optimum power saving throughout the radio transfer operation. Typically, the determination application will already have a *priori* knowledge of the QoS, data rate, and periodicity of the device application data required. It is this knowledge that allows the determination application to make the best choice of the triggering conditions and the mode of transfer of the application data from the UE to the gNB.

The configured measurements, which are performed by the UE, send information about specific radio conditions and enable the choice of the most spectrum and energy efficient radio resources needed for any possible data transmission to and from the UE.

In S312, which corresponds to the application layer signalling, rather than 3GPP specified signalling, triggering conditions are sent from the determination application to the device application.

In S314, application data is sent from the device application to the determination application via the application layer.

Note that italics in Figure 3 denote application layer signalling, which is outside of the 3GPP specified signalling framework. For clarity, both 3GPP signalling and application layer signalling have been highlighted in bound boxes. Of course, there is processing in the 3GPP system/framework in both cases. This figure and later figures, for brevity, do not show all aspects of the 3GPP flow as it is only indication a higher layer flow of data. All relevant information is carried over the air interface as user data or control data, fully under the control of the 3GPP system (on specific radio bearers, etc).

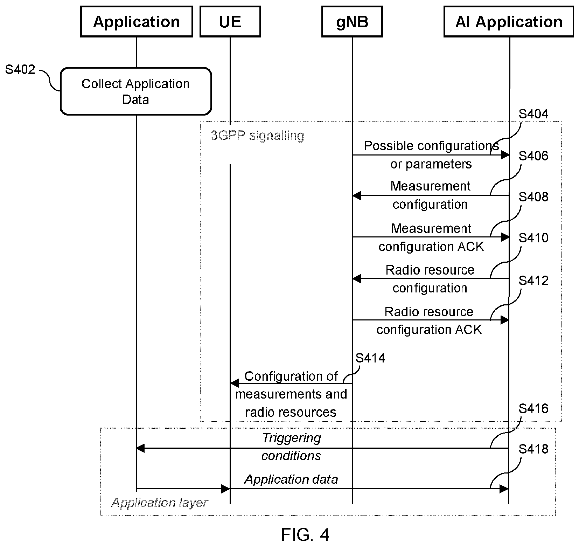

FIGURE 4 depicts an alternative measurement configuration in a wireless communication network. Many of the aspects are identical to those in the basic measurement configuration depicted in Figure 3, so the corresponding passages of description will not be repeated here.

In S406, the determination application determines a preferred measurement configuration from possible measurement configurations provided by the gNB. The determination application reports the preferred measurement configuration to the gNB.

In S408, the gNB sends acknowledgement of receipt of the preferred measurement configuration to the determination application. Optionally, if the preferred measurement configuration contains multiple choices, the acknowledgement may additionally include a chosen measurement configuration, as chosen by the gNB.

In S410, the determination application determines a preferred radio resource configuration from possible radio resource configurations provided by the gNB. The determination application reports the preferred radio resource configuration to the gNB.

In S412, the gNB sends acknowledgement of receipt of the preferred radio resource configuration to the determination application. Optionally, if the preferred radio resource configuration contains multiple choices, the acknowledgement may additionally include a chosen radio resource configuration, as chosen by the gNB.

In S414, the gNB transmits configuration of measurements and radio resources to the UE. The configuration of measurements corresponds to the measurement configuration reported by the AI application in S406; it may be identical in contents or it may different in terms of the detailed contents, for example to take into account any changes or selection made by the gNB. In this way, the determination application may not directly configure measurements but rather indicates to the gNB what is preferred and the gNB makes the final decision. For example, it may configure duration frequency, quantity and triggering conditions for these measurements. To understand some measurements that may be configured, reference may be made to 3GPP specification 38.300, section 10.1: Scheduling; Basis Scheduler Operation:

### Measurements to Support Scheduler Operation:

- *Uplink buffer status reports (measuring the data that is buffered in the logical channel queues in the UE) are used to provide support for QoS-aware packet scheduling;*
- *Power headroom reports (measuring the difference between the nominal UE maximum transmit power and the estimated power for uplink transmission) are used to provide support for power aware packet scheduling.*

Reference may also be made to specification 38.300, section 9.2.1.2: Mobility and State Transitions; Intra-NR; Mobility in RRC_IDLE; Cell Reselection:
*A UE in RRC_IDLE performs cell reselection. The principles of the procedure are the following:*
- *Cell reselection is always based on CD-SSBs located on the synchronization raster (see clause 5.2.4).*
- *The UE makes measurements of attributes of the serving and neighbour cells to enable the reselection process:*
- *For the search and measurement of inter-frequency neighbouring cells, only the carrier frequencies need to be indicated.*
- *Cell reselection identifies the cell that the UE should camp on. It is based on cell reselection criteria which involves measurements of the serving and neighbour cells:*
   - *Intra-frequency reselection is based on ranking of cells;*
   - *Inter-frequency reselection is based on absolute priorities where a UE tries to camp on the highest priority frequency available;*

The alternative measurement configuration depicted in Figure 4 demonstrates that the configuration of the measurement and radio resources is applied from the gNB to the UE. This implies that for the UE in IDLE mode, where no current application data is being sent or received, the UE may be optimised to perform the most power efficient and least resource consuming method of reporting current channel conditions to the network. One possible example of this is that for a UE with limited mobility, the determination application will be able to select a set of IDLE mode measurements that do not require many measurements to be made because of possible UE mobility (or lack thereof).

Similarly, in connected mode, the configuration of radio resources, which is usually performed by the gNB scheduler, may be optimised depending on the exact application data traffic characteristics.

In Figure 4, it can be seen that the configuration of trigger conditions (along with other information transferred to the device from the determination application) may include knowledge of the configuration of measurements and radio resources as these are present in the determination application because of the signalling exchange between the gNB and the determination application.

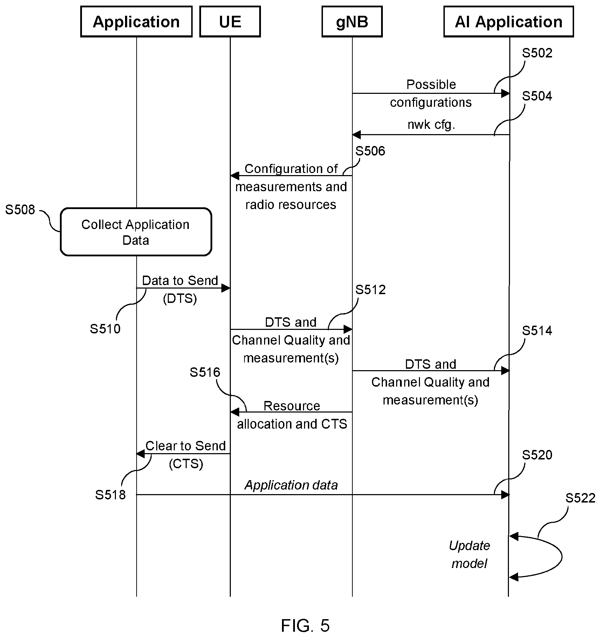

FIGURE 5 depicts an improved uplink data flow for data and measurements. Many of the aspects are identical to those in the previous depictions of measurement configuration, so the corresponding passages of description will not be repeated here.

In S506, the gNB transmits the selected *nwk cfg* to the UE, in order to provide a configuration of measurements. It is these measurements that are ultimately used in order to help determine the best radio resources that the application should use.

In S508, the device application collects application data and, in S510 sends a Data to Send (DTS) signal to the UE, which could be, for example, a Buffer Status Report (BSR). A further example of the signalling for DTS may be seen in the use of an uplink radio resource channel called a Scheduling Request (SR), which may be transmitted by the UE (for example, when no resources are available to transmit a BSR).

In S512, the UE sends the DTS and channel quality measurements to the gNB. In S514, the gNB sends the same DTS and channel quality measurements to the determination application.

In S516, the gNB transmits a resource allocation to the UE. The transmitted resource allocation may effectively be thought of as an updated network configuration. In this way, the gNB is in charge of the resource allocation based on the measurements and the previously received *nwk cfg.* Additionally, the gNB may transmit a Clear to Send (CTS) signal to the UE, indicating that the UE is free to transmit application data to the gNB. In S518, the UE sends the CTS signal to the device application and, in S520, the device application sends application data to the determination application.

In S522, the determination application updates an AI model using the device application data. Additionally or alternatively, the AI model may update using aspects of the DTS signal, channel quality measurements, or other radio resource measurement information. The update model processing may comprise aspects of ML. The factors that determine the determination application choice for *nwk cfg* may be determined through ML techniques such as Reinforcement Learning. This is typically implemented as an agent, interacting with an environment through a set of actions where, after each action, the agent is updated with the new state of the environment and the reward associated with the new state. Thus, the determination application may drive the network configuration to the optimum solution for the device application data that is being transferred.

While the update model is depicted here as occurring in the AI determination application after receipt of all of the data, update model could occur at any time, only preferably after all of the data is received.

In this manner, the network may optimise UL and DL resources. For example, by using the combination of DTS and specific Radio Resource Measurements (RRM) information (for example, Power Headroom Report (PHR)), the AI model is able to filter and shape the application data.

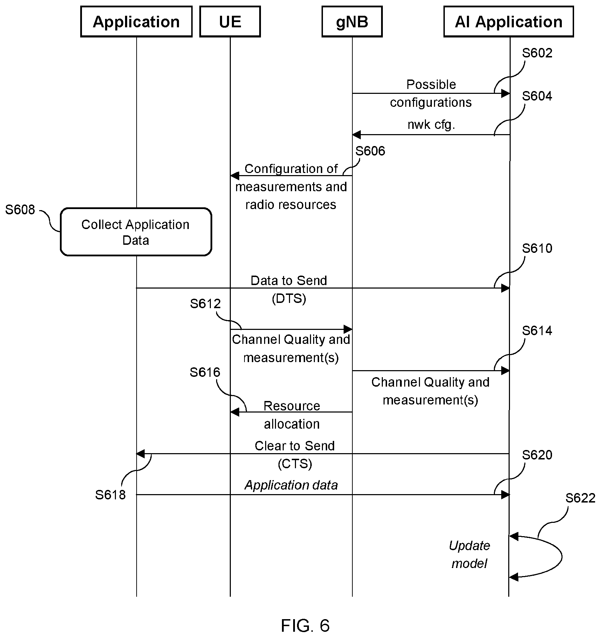

FIGURE 6 depicts application layer DTS and uplink data flow for data and measurements. The logic presented is, again, similar to the previous depictions of measurement configuration, so the corresponding passages of description will not be repeated here.

The example depicted here differs from the improved uplink data flow for data and measurements of Figure 5 in that, in S610, the DTS signal is directly transferred from the device application to the determination application, without any processing in the UE or in gNB. Accordingly, in S612, only channel quality and other measurements are transmitted from UE to gNB (that is, no DTS is transmitted via this means) and, in S614 only channel quality and other measurements are sent from the gNB to the determination application. In S616, resource allocation is transmitted from gNB to UE.

Similarly, in S618, the CTS signal is directly transferred from the determination application to the device application.

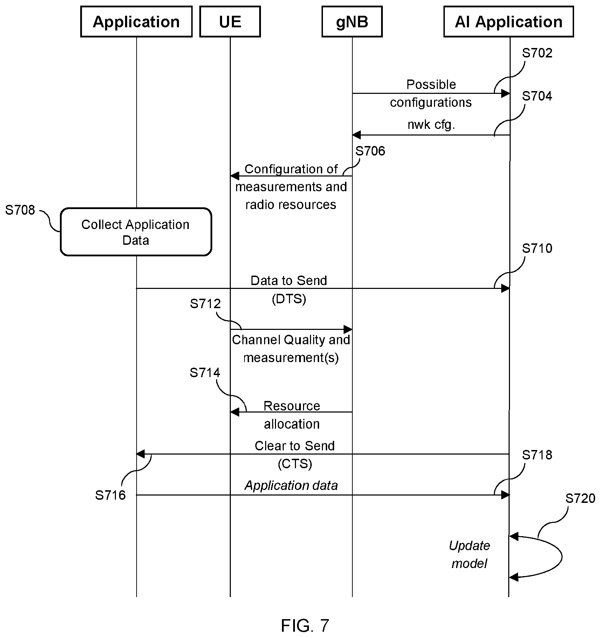

FIGURE 7 depicts application layer DTS and uplink data flow flow for data and measurements with no channel quality and measurements in gNB. The logic presented is, again, similar to the previous depictions of measurement configuration, so the corresponding passages of description will not be repeated here.

The example here differs from the method presented in Figure 6 in that, following S712, in which the UE transmits channel quality and other measurements to gNB, the gNB does not send the channel quality and the other measurements to the determination application. In this way, the gNB may modify the configuration of the measurements from information received from the determination application without sending the channel quality and other measurements onwards. Without this information, the determination application may only update the model based on application data characteristics. This addresses the use case where the network may wish to control traffic determined by the unique characteristics of the traffic flows, such as latency, bit-rate, and non-uniform data shaping. The use of Reinforcement Learning or similar techniques within the determination application may be used to derive the required radio resources needed to maintain aims such as overall latency or bit-rates.

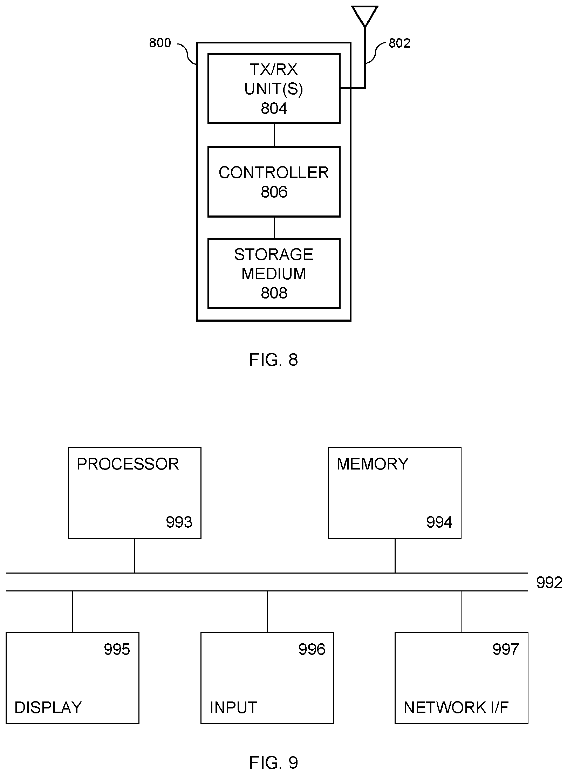

FIGURE 8 shows the hardware structure of a base station 800 suitable for use with invention embodiments, including an antenna 802, transmission and reception unit(s) 804, a controller 806, and a storage medium or memory 808. Base station 800 may, for instance, be an example of base station 204 in Figure 2.

The base station belongs to at least one RAT and may, for example, be described as an eNB or take a NR form and be described as a gNB. Other/different base stations may take any other form of a different RAT as long as they are suitable for transmitting and receiving signals from other stations.

In any embodiment, the controller 806 may be, for example, a microprocessor, digital signal processor (DSP), application-specific integrated circuit (ASIC), field-programmable gate array (FPGA), or other logic circuitry programmed or otherwise configured to perform the various functions described above. For example, the various functions described above may be embodied in the form of a computer program stored in the storage medium 808 and executed by the controller 806.

FIGURE 9 is a block diagram of a computing device which may be used to implement a method of an aspect of an embodiment of network configuration. For example, the computing device may store and run an AI determination application. The computing device may store and run the determination application 206 in Figure 2. The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, a term which may refer to a single medium or multiple media (e.g., a centralised or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of providing network configurations, determining preferred network configurations, and selecting network configurations described here and in the claims.

The memory 994 may store data being read and written by the processor 993, for example data corresponding to network configuration. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The network interface (network I/F) 997 may be connected to a network, such as the Internet, and is connectable to other such computing devices via the network. The network I/F 997 may control data input/output from/to other apparatus via the network.

The (Al) determination application of Figures 2 to 7 may be a processor 993 (or plurality thereof) executing processing instructions (a program) stored on a memory 994 and exchanging data with the base station via a network I/F 997. In particular, the processor 993 may execute processing instructions to receive, via the network I/F, possible network configurations from the base station and determine at least one preferred network configuration from the possible network configurations and report the preferred network configurations to the base station, as in S304 and S306 of Figure 3, for example.

Methods embodying aspects of the present invention may be carried out on a computing device such as that illustrated in Figure 9. Such a computing device need not have every component illustrated in Figure 9, and may be composed of a subset of those components. A method embodying aspects of the present invention may be carried out by a single computing device in communication with one or more data storage servers via a network. The computing device may be a data storage itself storing preferred and selected network configurations.

A method embodying aspects of the present invention may be carried out by a plurality of computing devices operating in cooperation with one another. One or more of the plurality of computing devices may be a data storage server storing at least a portion of the preferred and selected network configurations.

### Summary

Embodiments enable control of measurements made by a device and control of a data flow between a device and a network where the triggering of the measurements and the device configuration are controlled in consideration of performance metrics relating to the transfer of data corresponding to the data flow.

Embodiments may make use of artificial intelligence (Al) methods including, but not exclusively, machine learning (ML) methods. Such methods may be based on computational models and algorithms for classification, clustering, regression, and/or dimensionality reduction, such as neural networks, genetic algorithms, support vector machines, k-means, kernel regression and discriminant analysis.

Embodiments may address measurement and reporting to assist AI algorithms on the network side, including UE measurement in PHY layer and Radio Resource Measurements (RRM). Alternatively, the network side may include a non-Al based server or similar, which is capable of handling measurement, determination of a preferred network configuration and reporting.

Typically, in ML system like those that may be used in embodiments, inference occurs after training has occurred. Inference generally requires less computing resources and bandwidth than training. Inference is the part that after training takes smaller batches of real-time data and quickly produces a correct prediction based on the data.

The ML system may be a Device AI (DAI), in which the data from the UE or application attached to the UE (or any network device) is typically inference processed by ML algorithms looking for specific patterns or trends in the data. The output of the ML algorithms will typically be processed data and/or decisions taken on the input data (such as classification). The Output Data & Decisions will typically be further processed and acted on by the application.

The application of specific network configuration may be different for the training phase as to the inference phase.

Embodiments may also address the support of MDT (minimisation of drive tests) related features for identified use cases, including coverage optimisation and QoS verification, via application data collection.

In particular, embodiments may address the following:
- support for RAN operation when using different AI/ML models optimised to individual operator policies and optimisation objectives; and
- support for enhanced device power saving and improved paging performance by enabling the use of AI/ML assisted RAN level traffic modelling from enhanced UE measurements and data collection (e.g. enhanced immediate MDT).

Embodiments concern measurements and detailed configuration of the radio resources (network configuration) for efficient transfer of application data to provide efficient RAN operations, to maximise radio efficiency, and to enable enhanced analytics operation with reduced data processing.

Embodiments may address use cases where specific network configuration may be controlled to adapt to particular requirements relevant to the type of data being transferred, either in the UL or the DL. Examples include the use of beamforming, or multiple-input and multiple-output (MIMO), which is a method for multiplying the capacity of a radio link using multiple transmit and receive antennas to exploit multipath propagation, and different modulation and coding schemes for specific data rates, to match the radio channel conditions.

## Claims

1. A method in a wireless communication network, the wireless communication network comprising a base station (204) and a terminal (202) associated with a device application, the method comprising:
the base station (204) providing a plurality of possible network configurations to a determination application (206), each possible network configuration associated with transfer of device application data between the terminal (202) and the base station (204);
the determination application (206) determining at least one preferred network configuration from the plurality of possible network configurations and reporting the at least one preferred network configuration to the base station (204); and
the base station (204) selecting a network configuration from the at least one preferred network configuration and transmitting the selected network configuration to the terminal (202), **characterised in that**
the selected network configuration sets a triggering condition for transfer of the device application data from the terminal (202) to the determination application (206) via the base station (204).

2. The method of claim 1, wherein the determination application (206) analyses the device application data using machine learning, ML.

3. The method of any of the preceding claims, wherein the triggering condition is device application signalling which indicates to the wireless communication network that device application data is to be transferred from the terminal (202) to the base station (204).

4. The method of any of the preceding claims, wherein the possible network configurations are provided as a set of available configurations or as a list of parameters with optional ranges.

5. The method of any of the preceding claims, wherein the determination application (206) stores transmission parameters of the device application data such as QoS, data rate and periodicity, for use in determining at least one preferred network configuration.

6. The method of any of the preceding claims, wherein the determination application (206) determines a plurality of preferred network configurations and the base station (204) makes a final selection, and preferably wherein the base station (204) sends an acknowledgement to the determination application (206) indicating the selected network configuration.

7. The method of any of the preceding claims, wherein the determination application (206) sends a measurement configuration and a radio resource configuration, with the base station (204) preferably acknowledging each configuration separately.

8. The method of any of the preceding claims, wherein the determination application (206) generates and/or updates a machine learning model using the device application data, the machine learning model being used for the determining of the at least one preferred network configuration and preferably further comprising:
the device application transmitting a data to send, DTS, signal to the determination application (206).

9. The method of claim 8, further comprising:
the terminal (202) transmitting a data to send, DTS, signal and, optionally, radio resource management, RRM, information to the base station (204);
the base station (204) providing the DTS signal and, optionally, the RRM information to the determination application (206); and
the determination application (2060 updating the machine learning model using the DTS signal and, optionally, the RRM information.

10. The method of claim 9, wherein the base station (204) transmits a clear to send, CTS, signal to the terminal (202), and optionally an updated network configuration;
optionally, the terminal (202) transmitting radio resource management, RRM, information to the base station (204), and the base station (204) providing the RRM information to the determination application (206);
the determination application (206) updating the machine learning model using the DTS signal and, optionally, the RRM information.

11. The method of claim 10, wherein the determination application (206) transmits a clear to send, CTS, signal to the device application, and optionally the device application transmits the application data to the determination application (206).

12. The method of any of the preceding claims, wherein the network configuration comprises configuration for control of radio resource and/or for control of terminal power, for example including at least one of the following:
required uplink and downlink radio resources, for example including:
initial starting of data flow;
bit rate, latency, and/or quality of service, QoS, of data connection; and/or
terminating data flow;
terminal power consumption, preferably by scheduling;
radio resources, preferably by discontinuous transmission, DTX, and discontinuous reception, DRX; and/or
terminal transmission power; and/or
wherein the device application data comprises at least one of the following:
temperature;
humidity;
3D position;
a video snapshot;
a video stream;
web traffic; and/or
TCP/IP traffic.

13. A method in a base station (204) in a wireless communication network, the wireless communication network comprising the base station (204) and a terminal (202) associated with a device application, the method comprising:
providing a plurality of possible network configurations to a determination application (206), each possible network configuration associated with transfer of device application data between the terminal (202) and the base station (204);
receiving at least one preferred network configuration from the plurality of possible network configurations from the determination application (206);
selecting a network configuration from the at least one preferred network configuration and transmitting the selected network configuration to the terminal (202), **characterised in that**
the selected network configuration sets a triggering condition for transfer of the device application data from the terminal (202) to the determination application (206) via the base station (204).

14. A base station (204; 800) in a wireless communication network, the wireless communication network comprising the base station (204; 800) and a terminal (202) associated with a device application, the base station comprising:
a transmitter (804) and a receiver arranged for communication; and
a controller (806) arranged to:
provide a plurality of possible network configurations to a determination application (206), each possible network configuration associated with transfer of device application data between the terminal (202) and the base station (204; 800);
receive at least one preferred network configuration from the plurality of possible network configurations from the determination application (206); and
select a network configuration from the at least one preferred network configuration, wherein the transmitter (804) is arranged to transmit the selected network configuration to the terminal (202), **characterised in that**
the selected network configuration sets a triggering condition for transfer of the device application data from the terminal (202) to the determination application (206) via the base station (204;800).

15. A wireless communication network comprising a terminal (202) associated with a device application and the base station (204; 800) of claim 14.

## Patentansprüche

1. Verfahren in einem drahtlosen Kommunikationsnetzwerk, wobei das drahtlose Kommunikationsnetzwerk eine Basisstation (204) und ein Endgerät (202) umfasst, die einer Vorrichtungsanwendung zugeordnet sind, wobei das Verfahren Folgendes umfasst:
Bereitstellen einer Vielzahl möglicher Netzwerkkonfigurationen für eine Bestimmungsanwendung (206) durch die Basisstation (204), wobei jede mögliche Netzwerkkonfiguration einer Übermittlung von Vorrichtungsanwendungsdaten zwischen dem Endgerät (202) und der Basisstation (204) zugeordnet ist;
Bestimmen mindestens einer bevorzugten Netzwerkkonfiguration aus der Vielzahl möglicher Netzwerkkonfigurationen und Berichten der mindestens einen bevorzugten Netzwerkkonfiguration an die Basisstation (204) durch die Bestimmungsanwendung (206); und
Auswählen einer Netzwerkkonfiguration aus der mindestens einen bevorzugten Netzwerkkonfiguration und Übertragen der ausgewählten Netzwerkkonfiguration an das Endgerät (202) durch die Basisstation (204), **dadurch gekennzeichnet, dass**
die ausgewählte Netzwerkkonfiguration eine Auslösebedingung für die Übermittlung der Vorrichtungsanwendungsdaten von dem Endgerät (202) an die Bestimmungsanwendung (206) über die Basisstation (204) festlegt.

2. Verfahren nach Anspruch 1, wobei die Bestimmungsanwendung (206) die Vorrichtungsanwendungsdaten mithilfe von maschinellem Lernen (ML) analysiert.

3. Verfahren nach einem der vorhergehenden Ansprüche, wobei die Auslösebedingung eine Vorrichtungsanwendungssignalisierung ist, die dem drahtlosen Kommunikationsnetzwerk angibt, dass Vorrichtungsanwendungsdaten von dem Endgerät (202) an die Basisstation (204) zu übermitteln sind.

4. Verfahren nach einem der vorhergehenden Ansprüche, wobei die möglichen Netzwerkkonfigurationen als ein Satz verfügbarer Konfigurationen oder als eine Liste von Parametern mit optionalen Bereichen bereitgestellt werden.

5. Verfahren nach einem der vorhergehenden Ansprüche, wobei die Bestimmungsanwendung (206) Übertragungsparameter der Vorrichtungsanwendungsdaten, wie etwa QoS, Datenrate und Periodizität, zur Verwendung beim Bestimmen mindestens einer bevorzugten Netzwerkkonfiguration speichert.

6. Verfahren nach einem der vorhergehenden Ansprüche, wobei die Bestimmungsanwendung (206) eine Vielzahl von bevorzugten Netzwerkkonfigurationen bestimmt und die Basisstation (204) eine endgültige Auswahl trifft, und wobei die Basisstation (204) vorzugsweise eine Bestätigung an die Bestimmungsanwendung (206) sendet, die die ausgewählte Netzwerkkonfiguration angibt.

7. Verfahren nach einem der vorhergehenden Ansprüche, wobei die Bestimmungsanwendung (206) eine Messkonfiguration und eine Funkressourcenkonfiguration sendet, wobei die Basisstation (204) vorzugsweise jede Konfiguration separat bestätigt.

8. Verfahren nach einem der vorhergehenden Ansprüche, wobei die Bestimmungsanwendung (206) mithilfe der Vorrichtungsanwendungsdaten ein Modell für maschinelles Lernen generiert und/oder aktualisiert, wobei das Modell für maschinelles Lernen zum Bestimmen der mindestens einen bevorzugten Netzwerkkonfiguration verwendet wird, und vorzugsweise ferner umfassend:
Übertragen eines Signals Daten-zum-Senden (data to send - DTS) durch die Vorrichtungsanwendung an die Bestimmungsanwendung (206) .

9. Verfahren nach Anspruch 8, ferner umfassend:
Übertragen eines Signals Daten-zum-Senden (DTS) und optional von Informationen zur Funkressourcenverwaltung (Radio Resource Management - RRM) durch das Endgerät (202) an die Basisstation (204) ;
Bereitstellen des DTS-Signals und optional der RRM-Informationen durch die Basisstation (204) für die Bestimmungsanwendung (206); und
Aktualisieren des Modells für maschinelles Lernen durch die Bestimmungsanwendung (206) mithilfe des DTS-Signals und optional der RRM-Informationen.

10. Verfahren nach Anspruch 9, wobei die Basisstation (204) ein Signal Bereit-zum-Senden (clear to send - CTS) an das Endgerät (202) und optional eine aktualisierte Netzwerkkonfiguration überträgt;
wobei das Endgerät (202) optional Informationen zur Funkressourcenverwaltung (RRM) an die Basisstation (204) überträgt und die Basisstation (204) die RRM-Informationen der Bestimmungsanwendung (206) bereitstellt;
wobei die Bestimmungsanwendung (206) das Modell für maschinelles Lernen mithilfe des DTS-Signals und optional der RRM-Informationen aktualisiert.

11. Verfahren nach Anspruch 10, wobei die Bestimmungsanwendung (206) ein Signal Bereit-zum-Senden (CTS) an die Vorrichtungsanwendung überträgt und optional die Vorrichtungsanwendung die Anwendungsdaten an die Bestimmungsanwendung (206) überträgt.

12. Verfahren nach einem der vorhergehenden Ansprüche, wobei die Netzwerkkonfiguration eine Konfiguration zur Steuerung von Funkressourcen und/oder zur Steuerung der Endgeräteleistung umfasst, beispielsweise einschließlich mindestens eines der Folgenden:
erforderliche Uplink- und Downlink-Funkressourcen, zum Beispiel einschließlich:
anfänglicher Start eines Datenflusses;
Bitrate, Latenz und/oder Dienstqualität (Quality of Service - QoS) der Datenverbindung; und/oder
Beenden des Datenflusses;
Leistungsverbrauch des Endgeräts, vorzugsweise durch Planung;
Funkressourcen, vorzugsweise durch diskontinuierliche Übertragung (DTX) und diskontinuierlichen Empfang (DRX); und/oder
Übertragungsleistung des Endgeräts; und/oder
wobei die Vorrichtungsanwendungsdaten mindestens eines der Folgenden umfassen:
Temperatur;
Luftfeuchtigkeit;
3D-Position;
einen Video-Schnappschuss;
einen Videostream;
Webverkehr; und/oder
TCP/IP-Verkehr.

13. Verfahren in einer Basisstation (204) in einem drahtlosen Kommunikationsnetzwerk, wobei das drahtlose Kommunikationsnetzwerk die Basisstation (204) und ein Endgerät (202) umfasst, die einer Vorrichtungsanwendung zugeordnet sind, wobei das Verfahren Folgendes umfasst:
Bereitstellen einer Vielzahl möglicher Netzwerkkonfigurationen für eine Bestimmungsanwendung (206), wobei jede mögliche Netzwerkkonfiguration einer Übermittlung von Vorrichtungsanwendungsdaten zwischen dem Endgerät (202) und der Basisstation (204) zugeordnet ist;
Empfangen mindestens einer bevorzugten Netzwerkkonfiguration aus der Vielzahl möglicher Netzwerkkonfigurationen von der Bestimmungsanwendung (206);
Auswählen einer Netzwerkkonfiguration aus der mindestens einen bevorzugten Netzwerkkonfiguration und Übertragen der ausgewählten Netzwerkkonfiguration an das Endgerät (202), **dadurch gekennzeichnet, dass**
die ausgewählte Netzwerkkonfiguration eine Auslösebedingung für die Übermittlung der Vorrichtungsanwendungsdaten von dem Endgerät (202) an die Bestimmungsanwendung (206) über die Basisstation (204) festlegt.

14. Basisstation (204; 800) in einem drahtlosen Kommunikationsnetzwerk, wobei das drahtlose Kommunikationsnetzwerk die Basisstation (204; 800) und ein Endgerät (202) umfasst, die einer Vorrichtungsanwendung zugeordnet sind, wobei die Basisstation Folgendes umfasst:
einen Sender (804) und einen Empfänger, die zur Kommunikation angeordnet sind; und
eine Steuerung (806), die für Folgendes angeordnet ist:
Bereitstellen einer Vielzahl möglicher Netzwerkkonfigurationen für eine Bestimmungsanwendung (206), wobei jede mögliche Netzwerkkonfiguration einer Übermittlung von Vorrichtungsanwendungsdaten zwischen dem Endgerät (202) und der Basisstation (204; 800) zugeordnet ist;
Empfangen mindestens einer bevorzugten Netzwerkkonfiguration aus der Vielzahl möglicher Netzwerkkonfigurationen von der Bestimmungsanwendung (206); und
Auswählen einer Netzwerkkonfiguration aus der mindestens einen bevorzugten Netzwerkkonfiguration, wobei der Sender (804) angeordnet ist, um die ausgewählte Netzwerkkonfiguration an das Endgerät (202) zu übertragen, **dadurch gekennzeichnet, dass**
die ausgewählte Netzwerkkonfiguration eine Auslösebedingung für die Übermittlung der Vorrichtungsanwendungsdaten von dem Endgerät (202) an die Bestimmungsanwendung (206) über die Basisstation (204; 800) festlegt.

15. Drahtloses Kommunikationsnetzwerk, das ein Endgerät (202) umfasst, das einer Vorrichtungsanwendung und der Basisstation (204; 800) nach Anspruch 14 zugeordnet ist.

## Revendications

1. Procédé dans un réseau de communication sans fil, le réseau de communication sans fil comprenant une station de base (204) et un terminal (202) associé à une application de dispositif, le procédé comprenant :
la station de base (204) fournissant une pluralité de configurations de réseau possibles à une application de détermination (206), chaque configuration de réseau possible étant associée au transfert de données d'application de dispositif entre le terminal (202) et la station de base (204) ;
l'application de détermination (206) déterminant au moins une configuration de réseau préférée parmi la pluralité de configurations de réseau possibles et rapportant l'au moins une configuration de réseau préférée à la station de base (204) ; et
la station de base (204) sélectionnant une configuration de réseau parmi l'au moins une configuration de réseau préférée et transmettant la configuration de réseau sélectionnée au terminal (202), **caractérisé en ce que**
la configuration de réseau sélectionnée établit une condition de déclenchement pour le transfert des données d'application de dispositif du terminal (202) à l'application de détermination (206) via la station de base (204).

2. Procédé selon la revendication 1, dans lequel l'application de détermination (206) analyse les données d'application de dispositif en utilisant l'apprentissage automatique, ML.

3. Procédé selon l'une quelconque des revendications précédentes, dans lequel la condition de déclenchement est une signalisation d'application de dispositif qui indique au réseau de communication sans fil que les données d'application de dispositif doivent être transférées du terminal (202) à la station de base (204).

4. Procédé selon l'une quelconque des revendications précédentes, dans lequel les configurations de réseau possibles sont fournies sous la forme d'un ensemble de configurations disponibles ou sous la forme d'une liste de paramètres avec des plages facultatives.

5. Procédé selon l'une quelconque des revendications précédentes, dans lequel l'application de détermination (206) stocke des paramètres de transmission des données d'application de dispositif tels que la QoS, le débit de données et la périodicité, à utiliser pour déterminer au moins une configuration de réseau préférée.

6. Procédé selon l'une quelconque des revendications précédentes, dans lequel l'application de détermination (206) détermine une pluralité de configurations de réseau préférées et la station de base (204) effectue une sélection finale, et de préférence dans lequel la station de base (204) envoie un accusé de réception à l'application de détermination (206) indiquant la configuration de réseau sélectionnée.

7. Procédé selon l'une quelconque des revendications précédentes, dans lequel l'application de détermination (206) envoie une configuration de mesure et une configuration de ressource radio, la station de base (204) accuse de préférence réception de chaque configuration séparément.

8. Procédé selon l'une quelconque des revendications précédentes, dans lequel l'application de détermination (206) génère et/ou met à jour un modèle d'apprentissage automatique à l'aide des données d'application de dispositif, le modèle d'apprentissage automatique étant utilisé pour la détermination de l'au moins une configuration de réseau préférée et de préférence comprenant en outre :
l'application de dispositif transmettant un signal de données à envoyer, DTS, à l'application de détermination (206).

9. Procédé selon la revendication 8, comprenant en outre :
le terminal (202) transmettant un signal de données à envoyer, DTS, et, éventuellement, des informations de gestion des ressources radio, RRM, à la station de base (204) ;
la station de base (204) fournissant le signal DTS et, éventuellement, les informations RRM à l'application de détermination (206) ; et
l'application de détermination (206) mettant à jour le modèle d'apprentissage automatique à l'aide du signal DTS et, éventuellement, des informations RRM.

10. Procédé selon la revendication 9, dans lequel la station de base (204) transmet un signal prêt à envoyer, CTS, au terminal (202), et éventuellement une configuration de réseau mise à jour ;
éventuellement, le terminal (202) transmettant des informations de gestion de ressources radio, RRM, à la station de base (204), et la station de base (204) fournissant les informations RRM à l'application de détermination (206) ;
l'application de détermination (206) mettant à jour le modèle d'apprentissage automatique à l'aide du signal DTS et, éventuellement, des informations RRM.

11. Procédé selon la revendication 10, dans lequel l'application de détermination (206) transmet un signal prêt à envoyer, CTS, à l'application de dispositif, et éventuellement l'application de dispositif transmet les données d'application à l'application de détermination (206).

12. Procédé selon l'une quelconque des revendications précédentes, dans lequel la configuration de réseau comprend une configuration pour le contrôle d'une ressource radio et/ou pour le contrôle d'une puissance de terminal, par exemple comportant au moins l'un de ce qui suit :
des ressources radio de liaison montante et de liaison descendante nécessaires, comportant par exemple :
le démarrage initial de flux de données ;
un débit binaire, une latence et/ou une qualité de service, QoS, de la connexion de données ; et/ou
l'arrêt de flux de données ;
la consommation de puissance de terminal, de préférence en programmant ;
des ressources radio, de préférence par transmission discontinue, DTX, et réception discontinue, DRX ; et/ou
une puissance de transmission de terminal ; et/ou
dans lequel les données d'application de dispositif comprennent au moins l'un de ce qui suit :
une température ;
une humidité ;
une position 3D ;
une capture vidéo ;
un flux vidéo ;
un trafic Web ; et/ou
un trafic TCP/IP.

13. Procédé dans une station de base (204) dans un réseau de communication sans fil, le réseau de communication sans fil comprenant la station de base (204) et un terminal (202) associé à une application de dispositif, le procédé comprenant :
la fourniture d'une pluralité de configurations de réseau possibles à une application de détermination (206), chaque configuration de réseau possible étant associée au transfert de données d'application de dispositif entre le terminal (202) et la station de base (204) ;
la réception d'au moins une configuration de réseau préférée parmi la pluralité de configurations de réseau possibles à partir de l'application de détermination (206) ;
la sélection d'une configuration de réseau parmi l'au moins une configuration de réseau préférée et la transmission de la configuration de réseau sélectionnée au terminal (202), **caractérisé en ce que**
la configuration de réseau sélectionnée établit une condition de déclenchement pour le transfert des données d'application de dispositif du terminal (202) à l'application de détermination (206) via la station de base (204).

14. Station de base (204 ; 800) dans un réseau de communication sans fil, le réseau de communication sans fil comprenant la station de base (204 ; 800) et un terminal (202) associé à une application de dispositif, la station de base comprenant :
un émetteur (804) et un récepteur agencés pour communiquer ; et
un dispositif de commande (806) agencé pour :
fournir une pluralité de configurations de réseau possibles à une application de détermination (206), chaque configuration de réseau possible étant associée au transfert de données d'application de dispositif entre le terminal (202) et la station de base (204 ; 800) ;
recevoir au moins une configuration de réseau préférée parmi la pluralité de configurations de réseau possibles à partir de l'application de détermination (206) ; et
sélectionner une configuration de réseau parmi l'au moins une configuration de réseau préférée, dans lequel l'émetteur (804) est agencé pour transmettre la configuration de réseau sélectionnée au terminal (202), **caractérisé en ce que**
la configuration de réseau sélectionnée établit une condition de déclenchement pour le transfert des données d'application de dispositif du terminal (202) à l'application de détermination (206) via la station de base (204 ; 800).

15. Réseau de communication sans fil comprenant un terminal (202) associé à une application de dispositif et la station de base (204 ; 800) selon la revendication 14.
